# NEUE EUROPÄISCHE PATENTSCHRIFT

(11) **EP 2 872 796 B2**
(45) Veröffentlichungstag und Bekanntmachung des Hinweises auf die Entscheidung über den Einspruch: **21.06.2023**
(45) Hinweis auf die Patenterteilung: 16.10.2019
(21) Anmeldenummer: 13730234.5
(22) Anmeldetag: 18.06.2013
(51) Int. Cl.: F16F 15/14

(54) **DREHZAHLADAPTIVER SCHWINGUNGSTILGER UND DREHSCHWINGUNGSDÄMPFER MIT DIESEM**
ROTATIONAL SPEED-ADAPTIVE TUNED MASS ABSORBER AND TORSIONAL VIBRATION DAMPER WITH THE SAME
DISPOSITIF AMORTISSEUR D'OSCILLATIONS ADAPTATIF EN FONCTION DE LA VITESSE DE ROTATION ET AMORTISSEUR D'OSCILLATIONS DE ROTATION LE COMPRENANT

(30) Priorität: 12.07.2012 DE 102012212238
(43) Veröffentlichungstag der Anmeldung: 20.05.2015
(73) Patentinhaber: Schaeffler Technologies AG & Co. KG, 91074 Herzogenaurach (DE)
(72) Erfinder: HEPPERLE, Walter, 77652 Offenburg (DE); GVOZDEV, Mikhail, 77815 Bühl (DE); SEEBACHER, Roland, 77743 Neuried-Ichenheim (DE); RUSCH, Alain, F-67170 Brumath (FR)
(74) Vertreter: Wallinger Ricker Schlotter Tostmann
(86) Internationale Anmeldenummer: PCT/EP2013/062619
(87) Internationale Veröffentlichungsnummer: WO 2014/009112

(56) Entgegenhaltungen:
- WO-A2-98/51940
- DE-A1-102010 029 464
- DE-A1-102011 085 400

## Beschreibung

Die Erfindung betrifft einen drehzahladaptiven Schwingungstilger und einen Drehschwingungsdämpfer mit diesem mit einem um eine Drehachse drehenden Scheibenteil und mehreren an diesem über den Umfang angeordneten entlang eines entlang einer epizykloiden ersten Pendelbahn erzwungenen ersten Schwingwinkels auf eine vorgegebene erste Pendelordnung abgestimmt schwingenden Tilgermassen.

Drehzahladaptive Schwingungstilger werden beispielsweise als konstruktive Ausbildungen in Kraftfahrzeugen in Form von Fliehkraftpendeln zur Beruhigung eines drehschwingungsbehafteten Antriebsstrangs eingesetzt. Derartige Fliehkraftpendel werden wie beispielsweise aus den Dokumenten DE 10 2011 086 532 A1, DE 10 2010 054 302 A1, DE 10 2010 014 674 A1, WO 2010/127663 A1, WO 2011/113 410 A1 und DE102010029464 bekannt in Verbindung mit anderen Antriebsstrangbauteilen und insbesondere gemeinsam mit weiteren Schwingungsisolationseinrichtungen wie beispielsweise geteilten Schwungrädern, Torsionsschwingungsdämpfern und dergleichen mit nicht drehzahladaptiver Dämpfung kombiniert.

Die drehzahladaptive Tilgerfrequenz des Schwingungstilgers ergibt sich dabei durch entsprechende Auslegung dessen Pendelordnung auf eine Hauptordnung einer Anregungsquelle, beispielsweise einer Brennkraftmaschine mit einer im Wesentlichen von der Anzahl der Zylinder abhängigen Schwingungsordnung. Die Periodendauer einer Pendelschwingung der Tilgermassen des drehzahladaptiven Schwingungstilgers und somit eine aktuelle Schwingungsordnung des drehzahladaptiven Schwingungstilgers sind dabei abhängig von einem Schwingwinkel der Tilgermassen. Für kleine Schwingwinkel entspricht die aktuelle Schwingungsordnung im Wesentlichen der vorgesehenen Abstimmungsordnung. Mit zunehmendem Schwingwinkel nimmt die Abweichung der aktuellen Schwingungsordnung gegenüber der Abstimmordnung zu. Dies führt zu einer verschlechterten Isolationswirkung. Es werden daher epizykloide Pendelbahnen der Tilgermassen vorgesehen, die über den gesamten Schwingwinkel dieselbe Abstimmungsordnung ermöglichen. Hierbei treten Anschläge der Tilgermassen an dem diese aufnehmenden Scheibenteil auf, die die Isolationswirkung stark verschlechtern und die Festigkeit des Fliehkraftpendels beeinträchtigen. In der DE 10 2010 049 553 A1 wird daher vorgeschlagen, eine Reibeinrichtung vorzuschlagen, die den Schwingwinkel der Tilgermassen begrenzt. Gleichzeitig wird allerdings die Kapazität des Fliehkraftpendels begrenzt.

Weiterhin ist der Bauraum des Fliehkraftpendels begrenzt, so dass entsprechende Reibeinrichtungen zulasten einer radial außen vorgesehenen Anordnung der Tilgermassen gehen.

Es hat sich weiterhin gezeigt, dass bei eingeschränktem Bauraum und einer Brennkraftmaschine mit entsprechender Drehschwingungsbelastung beispielsweise mit drei oder weniger Zylindern eine Eigenform des Antriebsstrangs in einem Betriebszustand des Fahrzeugs also bei einer Drehzahl der Brennkraftmaschine über der Leerlaufdrehzahl liegt. Hierbei können entsprechende Resonanzen an dem drehzahladaptiven Schwingungstilger auftreten, die zu hohen Schwingwinkeln mit damit verbundenen Anschlägen der Tilgermassen führen können.

Aufgabe der Erfindung ist daher einen drehzahladaptiven Schwingungstilger und einen Drehschwingungsdämpfer mit diesem vorzuschlagen, der über den gesamten Betriebsbereich eines Antriebsstrangs wirksam ist und Anschläge der Tilgermassen des drehzahladaptiven Schwingungstilgers vermeidet oder zumindest unwahrscheinlich macht.

Die Aufgabe wird durch die Gegenstände der Ansprüche 1, 4, 5 und 6 gelöst.

In dem vorgeschlagenen drehzahladaptiven Schwingungstilger mit einem um eine Drehachse drehenden Scheibenteil und mehreren an diesem über den Umfang angeordneten entlang eines entlang einer epizykloiden ersten Pendelbahn erzwungenen ersten Schwingwinkels auf eine vorgegebene erste Pendelordnung abgestimmt schwingenden Tilgermassen sind bei den ersten Schwingwinkeln überschreitenden zweiten Schwingwinkeln die Tilgermassen auf eine gegenüber der ersten Pendelordnung geänderte zweite Pendelordnung erzwingenden zweiten Pendelbahnen geführt. Erfindungsgemäß ist dabei die zweite Pendelordnung kleiner als die erste Pendelordnung. Abhängig von einer vorgegebenen Schwingungsordnung der Brennkraftmaschine und der darauf abgestimmten Pendelordnung des drehzahladaptiven Schwingungstilgers ist die erste Pendelordnung auf die entsprechende Anregungsordnung der Brennkraftmaschine abgestimmt, so dass Brennkraftmaschinen in Form von Viertaktmotoren mit zwei, drei oder mehr Zylindern schwingungsisoliert werden können. Da bei derartigen Brennkraftmaschinen bei Einsatz von Drehschwingungsdämpfern in Verbindung mit einem drehzahladaptiven Schwingungstilger die Triebstrangeigenformen im Betriebsbereich der Drehzahlen der Brennkraftmaschine liegen, kann mittels einer Kombination aus einem Drehschwingungsdämpfer wie beispielsweise Torsionsschwingungsdämpfer in einer Kupplungsscheibe durch Erhöhen der Schwingwinkel der Tilgermassen ohne Anschlagsneigung eine Schwingungsisolation auch unterhalb der Eigenform des Antriebsstrangs erzielt werden.

Hierbei hat sich gezeigt, dass hohe Schwingwinkel ohne Anschlagneigung erzielt werden können, wenn, wie erfindungsgemäß, ein sich an einen ersten Krümmungswinkel der ersten Pendelbahn anschließender zweiter Krümmungswinkel der zweiten Pendelbahn kleiner als der erste Krümmungswinkel ist, die aktive Schwingungsordnung bei großen Schwingwinkeln also erniedrigt wird. Hierzu eignen sich von der epizykloiden Ausbildung der Pendelbahn in Richtung kleinere Krümmungswinkel abweichende Pendelbahnen, nämlich erfindungsgemäß sich an epizykloiden Pendelbahnen bei größeren Schwingwinkeln anschließende kreissegmentförmige Pendelbahnen.

Die Pendelschwingung der Tilgermassen kann hierbei im Sinne eines Fadenpendels, bei dem eine Tilgermasse mit der vorgegebenen Pendellänge um einen einzigen Pendelpunkt schwingt, oder im Sinne eines Trapezpendels, bei dem eine Tilgermasse mit der vorgegebenen Pendellänge um zwei in Umfangsrichtung des Scheibenteils beabstandete Pendelpunkte schwingt, ausgebildet sein.

Der erste Schwingwinkel mit einer epizykloiden Pendelbahn einer vorgegebenen Pendelordnung kann je nach vorhandenem Bauraum zwischen ± 30° bis ± 60° vorgesehen sein, an welchen sich der zweite Schwingwinkel anschließt. Dieser kann beispielsweise auf ± 90° begrenzt sein.

Der vorgeschlagene drehzahladaptive Schwingungstilger kann in bevorzugter Weise in Kombination mit einem konventionellen Drehschwingungsdämpfer ohne zusätzliche Primär- und Sekundärschwungmasse eingesetzt werden, so dass eine kostengünstige und bauraumoptimierte Lösung vorgeschlagen werden kann. Ein entsprechender Drehschwingungsdämpfer enthält dabei den vorgeschlagenen drehzahladaptiven Schwingungstilger bevorzugt in Form eines Fliehkraftpendels. Hierzu kann in einer Kupplungsscheibe einer Reibungskupplung der vorgeschlagene Drehschwingungsdämpfer mit dem Fliehkraftpendel ausgebildet sein. Alternativ kann eine Reibungskupplung mit dem Fliehkraftpendel vorgesehen sein, wobei der Drehschwingungsdämpfer an der Kupplungsscheibe der Reibungskupplung vorgesehen sein kann.

Die Erfindung wird anhand der in den Figuren 1 bis 5 dargestellten Ausführungsbeispiele näher erläutert. Dabei zeigen:
- Figur 1: eine schematische Darstellung eines Antriebstrangs eines Kraftfahrzeugs mit einem drehzahladaptiven Schwingungstilger und einem Drehschwingungsdämpfer,
- Figur 2: ein Diagramm zum Verhalten verschiedener Schwingungstilgeranordnungen über deren Drehzahl,
- Figur 3: eine schematische Darstellung verschiedener Pendelbahnen von drehzahladaptiven Schwingungstilgern,
- Figur 4: ein Diagramm zur Darstellung einer über den Schwingwinkel abnehmenden Pendelordnung
und
- Figur 5: eine Gegenüberstellung des Schwingungsverhaltens zweier auf verschiedene Pendelordnungen abgestimmter drehzahladaptiver Schwingungstilger.

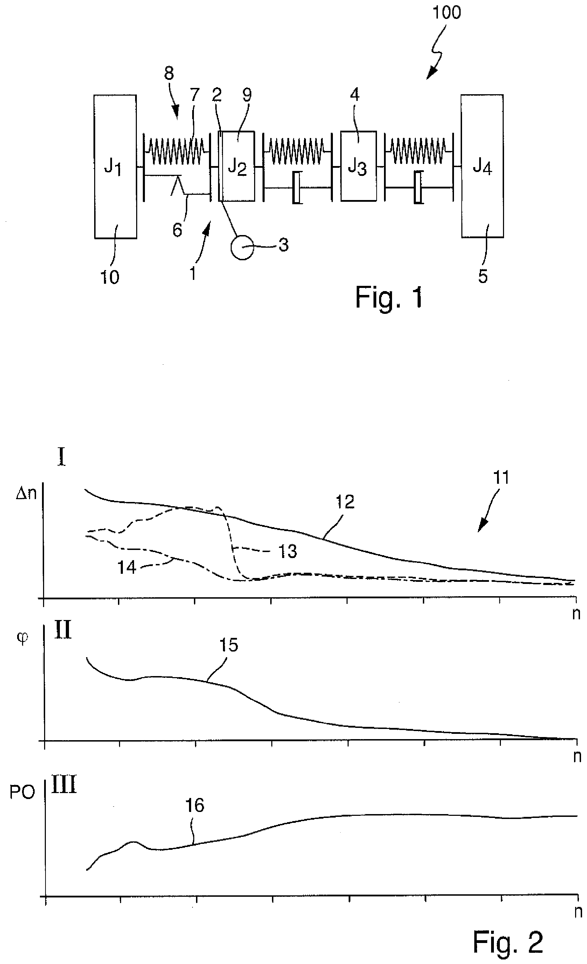

Der in Figur 1 schematisch dargestellte Antriebsstrang 100 wird von einer drehschwingungsbehafteten Brennkraftmaschine angetrieben. Hierzu treibt eine nicht dargestellte Kurbelwelle das Schwungrad 10 mit dem Massenträgheitsmoment J₁ an. Zwischen das Schwungrad 10 und einer zweiten Masse 9 mit dem Massenträgheitsmoment J₂ ist der Drehschwingungsdämpfer 8 mit der Federeinrichtung 7 und der Reibeinrichtung 6 angeordnet. Je nach Auslegung der Massenträgheitsmomente J₁, J₂ kann der Drehschwingungsdämpfer 8 als geteiltes Schwungrad oder als konventioneller, beispielsweise auf einer Kupplungsscheibe oder in einem hydrodynamischen Drehmomentwandler angeordneter Drehschwingungsdämpfer dargestellt werden. Der Drehschwingungsdämpfer 8 ist bezüglich seiner Wirkung zur Dämpfung von Drehschwingungen der Brennkraftmaschine im Wesentlichen unabhängig von deren Drehzahl ausgelegt, wobei durch Federeinrichtungen 7 beispielsweise in Form von Bogenfedern die Reibeinrichtung fliehkraftabhängig und damit drehzahlabhängig veränderbar ist. Bevorzugt der zweiten Masse 9 ist der drehzahladaptive Schwingungstilger 1 zugeordnet. Dieser enthält das Scheibenteil 2 und zwei oder mehrere gegenüber diesem auf in Drehrichtung wirksam angeordneten Pendelbahnen aufgenommenen Tilgermassen 3. Der Rest des Antriebsstrangs 4, beispielsweise Getriebe, Differential und Räder, sowie Fahrzeugkarosserie 5 sind mittels der miteinander elastisch verbundenen Massenträgheitsmomente J₃, J₄ schematisch dargestellt. Infolge der jeweils elastischen Anbindung der Massenträgheitsmomente J₁, J₂, J₃, J₄ gegeneinander ist der Antriebsstrang durch eine systembedingte Eigenform gekennzeichnet.

Die Tilgermassen 3 schwingen gegenüber dem Scheibenteil 2 mit einer von der Drehzahl der Brennkraftmaschine abhängigen Frequenz und tilgen dabei bei Auslegung der Pendelordnung auf eine Schwingungsordnung, bevorzugt die Hauptschwingungsordnung der Brennkraftmaschine die drehzahlabhängig auftretenden Drehschwingungen entsprechend drehzahlabhängig. Um eine Beibehaltung der eingestellten Pendelordnung über kleine und mittlere Schwingwinkel konstant zu halten und damit einen guten Isolationsgrad zu erzielen, sind die Pendelbahnen der Tilgermassen epizykloid ausgebildet. Infolge des beengten Bauraums des drehzahladaptiven Schwingungstilgers 1 sind die Schwingwinkel dessen Tilgermassen 3 begrenzt, so dass sie bei hohen Anregungen dazu neigen an den Bahnbegrenzungen der Pendelbahn anzuschlagen. Um dies zu vermeiden oder zumindest um ein hohes Maß einzuschränken, sind die Pendelbahnen gegenüber einer Mittellage zweiteilig ausgebildet. Während bei kleinen und mittleren Schwingwinkeln um die Mittellage die epizykloide, einer vorgegebenen Pendelordnung entsprechende Pendelbahnen beibehalten bleiben, wird bei großen Schwingwinkeln die Pendelordnung erniedrigt, indem die Krümmung der Pendelbahnen gegenüber den epizykloiden Pendelbahnen am Übergang erniedrigt wird. Hierdurch sinkt zwar der Isolationsgrad, es werden jedoch die Isolation völlig störende Anschläge vermieden und damit Geräusche vermieden und den Schwingungstilger belastende beziehungsweise schädigende Anschläge der Tilgermassen am Scheibenteil vermieden.

Die Figur 2 zeigt das Diagramm 11 mit den Teildiagrammen I, II, III, deren Abszisse jeweils das Drehzahlband der Drehzahlen n einer Brennkraftmaschine zeigt. In Teildiagramm I sind die drehschwingungsbehafteten Differenzdrehzahlen Δn über die Drehzahl n der Brennkraftmaschine gezeigt. Dabei zeigt die Kurve 12 das Verhalten der Brennkraftmaschine, die Kurve 13 das Verhalten eines konventionellen drehzahladaptiven Schwingungstilgers mit über den gesamten Schwingwinkel epizykloid ausgebildeten Pendelbahnen und die Kurve 14 das Verhalten des vorgeschlagenen drehzahladaptiven Schwingungstilgers mit sich an einen epizykloid ausgebildeten Schwingwinkelbereich anschließenden Schwingwinkelbereich mit verringerter Schwingungsordnung. Aufgrund dieser Ausgestaltung unterbleiben über die Drehzahl ansteigende Schwingwinkel des konventionellen Schwingungstilgers. Das Teildiagramm II zeigt die zu der Kurve 14 zugehörige Kurve 15 mit den Schwingwinkeln ϕ der Tilgermassen über die Drehzahl n des vorgeschlagenen Schwingungstilgers. Teildiagramm III zeigt mit der Kurve 16 die Pendelordnung PO über die Drehzahl n. Infolge der bei kleinen Drehzahlen n auftretenden großen Schwingwinkel ϕ ist bei diesen Drehzahlen die Schwingungsordnung PO erniedrigt.

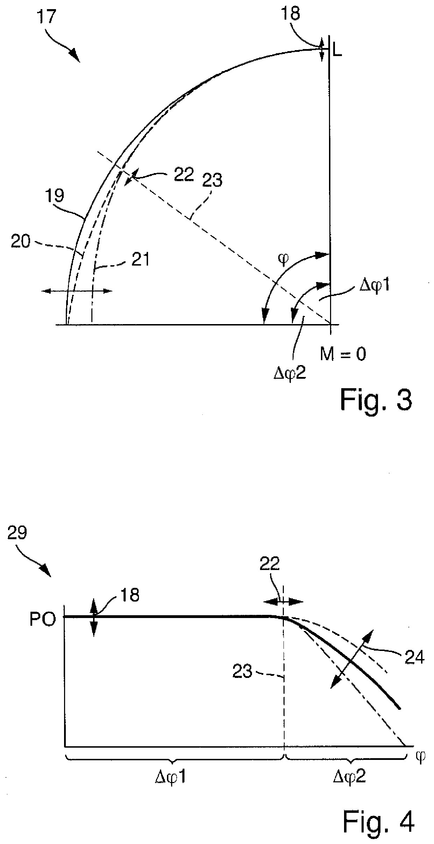

Die Figur 3 zeigt im Diagramm 17 die mögliche Ausgestaltung einer Pendelbahn der Tilgermassen ausgehend von einer Mittellage M, von der aus in beide Richtungen die Tilgermassen mit der um den Doppelpfeil 18 einstellbaren Pendellänge L um den Schwingwinkel ϕ auslenkbar sind. Die Kurve 20 zeigt die epizykloide Pendelbahn mit dem über den gesamten Schwingwinkel ϕ gleichmäßig eingestellten Krümmungsradius. Die Kurve 19 zeigt eine kreissegmentförmige Pendelbahn. Die Kurve 21 zeigt die vorgeschlagene Pendelbahn mit im Schwingwinkelbereich Δϕ₁ mit kleinen Schwingwinkeln ϕ epizykloider Pendelbahn und im Schwingwinkelbereich Δϕ₂ mit großen Schwingwinkeln ϕ kreissegmentförmiger Pendelbahn. Die Trennlinie 23 zwischen den Schwingwinkelbereichen Δϕ₁, Δϕ₂ kann abhängig vom maximalen Schwingwinkel, beispielsweise 60° bis 90° auf beispielsweise 30° bis 60° entlang des Doppelpfeils 22 eingestellt werden. Aus Figur 4 geht entsprechend das Diagramm 29 der Pendelordnung PO gegen den Schwingwinkel ϕ hervor. Bis zu der entlang des Doppelpfeils 22 einstellbaren Trennlinie 23 stellt sich über den Schwingwinkelbereich Δϕ₁ eine entlang des Doppelpfeils 18 einstellbare konstante Pendelordnung ein, die aufgrund der beispielsweise in Figur 3 gezeigten Krümmungswinkeländerung der Kurve 21 im Schwingwinkelbereich Δϕ₂ zu einer einstellbaren Erniedrigung der Pendelordnung führt. Neben einer kreissegmentförmigen Änderung der Pendelbahn können hierzu engere oder weitere Krümmungen vorgesehen sein, so dass die Pendelordnung entlang des Doppelpfeils 24 einstellbar ist.

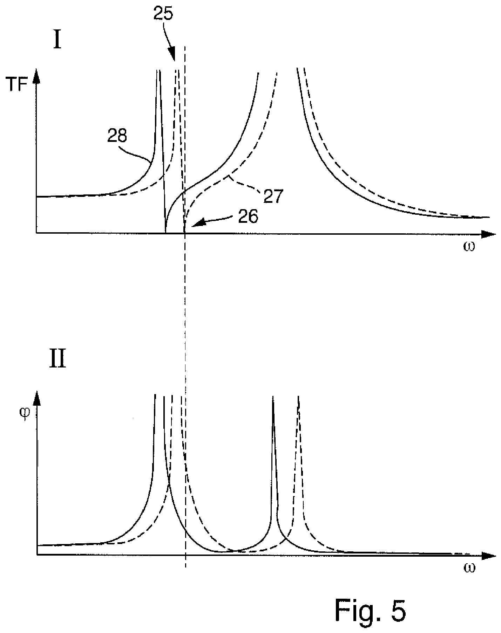

Die Figur 5 zeigt in Teildiagramm I die Transferfunktion TF von drehzahladaptiven Schwingungstilgern und in Teildiagramm II die Schwingwinkel ϕ über die Schwingungsfrequenz ω. Hierbei sind mit den Symbolen "x" versehen die Kurve 27 eines konventionellen drehzahladaptiven Schwingungstilgers und mit Symbolen "o" versehen die Kurve 28 des vorgeschlagenen drehzahladaptiven Schwingungstilgers bei großen Schwingwinkeln gegenübergestellt. Aufgrund der Verstimmung des vorgeschlagenen Schwingungstilgers in Richtung einer geringeren Pendelordnung entfernt sich dieser von der Resonanzstelle 25 und der Antiresonanzstelle 26 der Eigenform des Antriebsstrangs, so dass bei zwar verschlechtertem Isolationsgrad eine Resonanz der Tilgermassen mit einer Eigenform des Antriebsstrangs unterbleibt, wodurch der Schwingwinkel der Tilgermassen gering bleibt.

### Bezugszeichenliste

- 1: drehzahladaptiver Schwingungstilger
- 2: Scheibenteil
- 3: Tilgermasse
- 4: Rest des Antriebsstrangs
- 5: Fahrzeugkarosserie
- 6: Reibeinrichtung
- 7: Federeinrichtung
- 8: Drehschwingungsdämpfer
- 9: Masse
- 10: Schwungrad
- 11: Diagramm
- 12: Kurve
- 13: Kurve
- 14: Kurve
- 15: Kurve
- 16: Kurve
- 17: Diagramm
- 18: Doppelpfeil
- 19: Kurve
- 20: Kurve
- 21: Kurve
- 22: Doppelpfeil
- 23: Trennlinie
- 24: Doppelpfeil
- 25: Resonanzstelle
- 26: Antiresonanzstelle
- 27: Kurve
- 28: Kurve
- 29: Diagramm
- 100: Antriebsstrang
- I: Teildiagramm
- II: Teildiagramm
- III: Teildiagramm
- J₁: Massenträgheitsmoment
- J₂: Massenträgheitsmoment
- J₃: Massenträgheitsmoment
- J₄: Massenträgheitsmoment
- L: Pendellänge
- M: Mittellage
- n: Drehzahl
- Δn: Differenzdrehzahl
- PO: Pendelordnung
- TF: Transferfunktion
- ϕ: Schwingwinkel
- Δϕ₁: Schwingwinkelbereich
- Δϕ₂: Schwingwinkelbereich

## Patentansprüche

1. Drehzahladaptiver Schwingungstilger (1) mit einem um eine Drehachse drehenden Scheibenteil (2) und mehreren an diesem über den Umfang angeordneten entlang eines entlang einer epizykloiden ersten Pendelbahn erzwungenen ersten Schwingwinkels auf eine vorgegebene erste Pendelordnung abgestimmt schwingenden Tilgermassen (3), wobei bei den ersten Schwingwinkeln überschreitenden zweiten Schwingwinkeln die Tilgermassen (3) auf eine gegenüber der ersten Pendelordnung geänderte zweite Pendelordnung erzwingenden zweiten Pendelbahnen geführt sind, wobei die zweite Pendelordnung kleiner als die erste Pendelordnung ist, wobei ein sich an einen ersten Krümmungswinkel eines ersten Schwingwinkelbereichs (Δϕ₁) der ersten Pendelbahn anschließender zweiter Krümmungswinkel eines zweiten Schwingwinkelbereichs (Δϕ₂) der zweiten Pendelbahn kleiner als der erste Krümmungswinkel ist und wobei die zweite Pendelbahn kreissegmentförmig ausgebildet ist.

2. Drehzahladaptiver Schwingungstilger (1) nach Anspruch 1, **dadurch gekennzeichnet, dass** die Tilgermassen (3) fadenpendelförmig gegenüber dem Scheibenteil (2) verschwenkend geführt sind.

3. Drehzahladaptiver Schwingungstilger nach Anspruch 1, **dadurch gekennzeichnet, dass** die Tilgermassen trapezpendelförmig gegenüber dem Scheibenteil verschwenkend geführt sind.

4. Drehschwingungsdämpfer (8) für einen Antriebsstrang mit einer Eigenform größer als einer minimalen Betriebsfrequenz einer Brennkraftmaschine mit einem drehzahladaptiven Schwingungstilger (1) gemäß den Ansprüchen 1 bis 3.

5. Kupplungsscheibe mit einem Drehschwingungsdämpfer (8) nach Anspruch 4.

6. Reibungskupplung mit einem drehzahladaptiven Schwingungstilger (1) nach einem der Ansprüche 1 bis 3.

## Claims

1. Adaptive-speed vibration absorber (1) having a disc part (2) which rotates about a rotational axis, and having a plurality of absorber masses (3) which are arranged on the said disc part (2) over the circumference and vibrate in a manner which is tuned to a predefined first vibration order along a first vibration angle which is forced along an epicyclical first vibration path, wherein, in the case of second vibration angles which exceed the first vibration angles, the absorber masses (3) are guided on second vibration paths which force a second vibration order which is changed in comparison with the first vibration order, wherein the second vibration order is smaller than the first vibration order, wherein the second vibration order is smaller than the first vibration order wherein a second curvature angle of a second vibration angle range (Δϕ₂) of the second vibration path, which second curvature angle adjoins a first curvature angle of a first vibration angle range (Δϕ₁) of the first vibration path, is smaller than the first curvature angle and wherein the second vibration path is of circular segment-shaped configuration.

2. Adaptive-speed vibration absorber (1) according to Claim 1, **characterized in that** the absorber masses (3) are guided so as to swing with respect to the disc part (2) in a thread pendulum-shaped manner.

3. Adaptive-speed vibration absorber (1) according to one of Claim 1, **characterized in that** the absorber masses are guided so as to swing with respect to the disc part in a trapezoidal pendulum-shaped manner.

4. Torsional vibration damper (8) for a drive train having an eigenmode which is greater than a minimum operating frequency of an internal combustion engine having an adaptive-speed vibration absorber (1) according to Claims 1 to 3.

5. Clutch disc having a torsional vibration damper (8) according to Claim 4.

6. Friction clutch having an adaptive-speed vibration absorber (1) according to one of Claims 1 to 3.

## Revendications

1. Dispositif amortisseur d'oscillations (1) adaptatif en fonction de la vitesse de rotation, comportant une partie en disque (2) en rotation autour d'un axe de rotation et plusieurs masses d'amortissement (3) disposées sur celle-ci sur le pourtour et oscillant de manière accordée sur un premier ordre d'oscillation prédéfini le long d'un premier angle d'oscillation forcé le long d'une première trajectoire d'oscillation épicycloïde, dans lequel en présence de deuxièmes angles d'oscillation qui dépassent les premiers angles d'oscillation, les masses d'amortissement (3) sont guidées sur des deuxièmes trajectoires d'oscillation forçant un deuxième ordre d'oscillation modifié par rapport au premier ordre d'oscillation, dans lequel le deuxième ordre d'oscillation est plus petit que le premier ordre d'oscillation, dans lequel un deuxième angle de courbure d'une deuxième plage d'angles d'oscillation (Δϕ₂) de la deuxième trajectoire d'oscillation, qui se rattache à un premier angle de courbure d'une première plage d'angles d'oscillation (Δϕ₁) de la première trajectoire d'oscillation est inférieur au premier angle de courbure et dans lequel la deuxième trajectoire d'oscillation est réalisée en forme de segments de cercle.

2. Dispositif amortisseur d'oscillations (1) adaptatif en fonction de la vitesse de rotation selon la revendication 1, **caractérisé en ce que** les masses d'amortissement (3) sont guidées en basculement en forme de pendule simple par rapport à la partie en disque (2).

3. Dispositif amortisseur d'oscillations adaptatif en fonction de la vitesse de rotation selon la revendication 1, **caractérisé en ce que** les masses d'amortissement sont guidées en basculement en forme de pendule trapézoïdal par rapport à la partie en disque.

4. Amortisseur d'oscillations de rotation (8) pour un groupe motopropulseur ayant une forme propre supérieure à une fréquence de fonctionnement minimale d'un moteur à combustion interne comportant un dispositif amortisseur d'oscillations (1) adaptatif en fonction de la vitesse de rotation selon les revendications 1 à 3.

5. Disque d'embrayage comportant un amortisseur d'oscillations de rotation (8) selon la revendication 4.

6. Accouplement à friction comportant un dispositif amortisseur d'oscillations (1) adaptatif en fonction de la vitesse de rotation selon l'une des revendications 1 à 3.
